# EUROPEAN PATENT APPLICATION

(11) **EP 2 105 049 A1**
(43) Date of publication of application: **30.09.2009**
(21) Application number: 08153581.7
(22) Date of filing: 28.03.2008
(51) Int. Cl.: A01N 43/56, A01P 21/00, A01N 43/54, A01N 37/50, A01N 43/88, A01N 47/24

(54) **Method of plant growth promotion using amide compounds**

(71) Applicant: Bayer CropScience AG, 40789 Monheim (DE)
(72) Inventor: The designation of the inventor has not yet been filed

(57) **Abstract**

The present invention relates to a new method of plant treatment that is able to induce positive growth regulating responses by applying a non-phytotoxic, effective plant growth promoting amount of an amide compound having the formula I

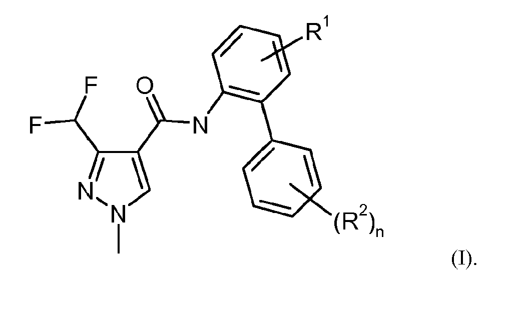

## Description

The present invention relates to a new method of plant treatment that is able to induce positive growth regulating responses.

The term"method for regulating plant growth"or the term"growth regulation process" or the use of the words"growth regulation"or other terms using the word"regulate"as used in the instant specification mean a variety of plant responses which attempt to improve some characteristic'of the plant as distinguished from pesticidal action, the intention of which is to destroy or stunt a growth of a plant or a living being. For this reason the compounds used in the practice of this invention are used in amounts which are non-phytotoxic with respect to the plant being treated.

More precisely, the present invention relates to the use of certain amide compounds, in particular nicotinamide compounds in order to induce growth-regulating responses.

EP-A 0545099 describes amide derivatives and their use to combat Botrytis. Nothing is disclosed with regard to a plant growth promotion effect.

WO 2005/018324 describes carboxamides, in particular boscalid, and their use for inducing positive growth regulating responses.

It is an object of the present invention to provide a method of plant growth in order to obtain better plants, higher crop yield, better crop quality and better conditions of agri-cultural practices.

We have found that this object is achieved by a method for treating plants in need of growth promotion, comprising applying to said plants, to the seeds from which they grow or to the locus in which they grow, a non-phytotoxic, effective plant growth promoting amount of an amide compound having the formula I 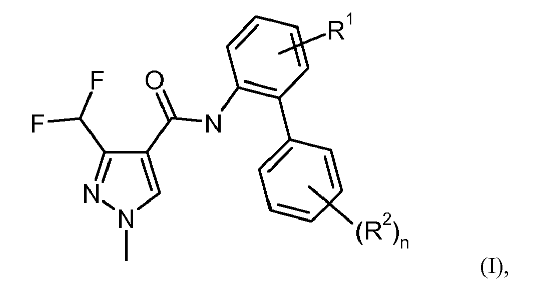 wherein
- R¹: is hydrogen or halogen;
- R²: is halogen;
- n: is an integer selected from 1 or 2.

In a preferred embodiment of the invention
- R¹: is fluorine;
- R²: is chlorine;
- n: is 2.

In a more preferred embodiment of the present invention
- R¹: is 5-fluorine;
- R²: is 3,4-dichloro.

Most preferred compounds are selected from the group consisting of N-(3',4'-dichloro-5-fluorobiphenyl-2-yl)-3-(difluoromethyl)-1-methyl-1H-pyrazole-4-carboxamide (Bixafen) as described in WO 03/070705, the disclosure of which is incorporated herein by reference, and N-(3',4'-dichlorobiphenyl-2-yl)-3-(difluoromethyl)-1-methyl-1H-pyrazole-4-carboxamide as described in WO 2005/123690 the disclosure of which is incorporated herein by reference.

The amide compounds used in the method of the present invention have been found to display a wide variety of plant growth regulating properties, depending upon the concentration used, the formulation employed and the type of plant species treated.

By virtue of the practice of the present invention a wide variety of plant growth responses, including the following : a) bigger fruit size b) bigger vegetable size c) higher sugar concentration of fruits d) more developed root system e) higher crop firmness longer storability g) improved appearance h) better fruit finish i) earlier fruit maturation j) increase in plant height k) bigger leaf blade i) less dead basal leaves m) greener leaf color n) earlier flowering o) increased shoot growth p) improved plant vigour q) early germination.

In a preferred embodiment of the present invention the plant growth promoting amount of N-(3',4'-dichloro-5-fluorobiphenyl-2-yl)-3-(difluoromethyl)-1-methyl-1H-pyrazole-4-carboxamide (Bixafen) applied is sufficient to provide at least one plant growth promoting effect selected from the group consisting of: a) bigger fruit size b) bigger vegetable size c) higher sugar concentration of fruits d) more developed root system e) higher crop firmness longer storability g) improved appearance h) better fruit finish i) earlier fruit maturation j) increase in plant height k) bigger leaf blade I) less dead basal leaves m) greener leaf color n) earlier flowering o) increased shoot growth p) improved plant vigour q) early germination.

In a further preferred embodiment of the present invention the plant growth promoting amount of N-(3',4'-dichlorobiphenyl-2-yl)-3-(difluoromethyl)-1-methyl-1H-pyrazole-4-carboxamide applied is sufficient to provide at least one plant growth promoting effect selected from the group consisting of: a) bigger fruit size b) bigger vegetable size c) higher sugar concentration of fruits d) more developed root system e) higher crop firmness longer storability g) improved appearance h) better fruit finish i) earlier fruit maturation j) increase in plant height k) bigger leaf blade I) less dead basal leaves m) greener leaf color n) earlier flowering o) increased shoot growth p) improved plant vigour q) early germination.

It is intended that as used in the instant specification the term "method for regulating plant growth" means the achievement of any of the aforementioned 16 categories of response as well as any other modification of plant, seed, fruit, vegetable, whether the fruit or vegetable is unharvested or has been harvested, so long as the net result is to increase growth and quality or benefit any property of the plant, seed, fruit or vegetable as distinguished from any pesticidal action. The term "fruit" as used in the instant specification is to be understood as meaning anything of economic value that is produced by the plant.

Certain preliminary details connected with the foregoing 16 categories should make for a better appreciation of the invention.

Description of possible formulations may be found in patent applications WO-A-2005/123690 and WO 03/070705.

The application rates of the compounds I are from 0.005 to 0.5 kg/ha, preferably 0.01 to 0.2 kg/ha, in particular 0.02 to 0.1 kg/ha.

For seed treatment, the application rates of the mixture are generally from 0.001 to 250 g/kg of seed, preferably 0.01 to 100 g/kg, in particular 0.01 to 50 g/kg.

The amide compounds 1, can be formulated for example in the form of ready-to-spray solutions, powders and suspensions or in the form of highly concentrated aqueous, oily or other suspensions, dispersions, emulsions, oil dispersions, pastes, dusts, materials for broadcasting or granules, and applied by spraying, atomizing, dusting, broadcasting or watering. The use form depends on the intended purpose; in any case, it should ensure as fine and uniform as possible a distribution of the mixture according to the invention.

The formulations are prepared in a known manner, e. g. by extending the active ingredient with solvents and/or carriers, if desired using emulsifiers and dispersants, it being possible also to use other organic solvents as auxiliary solvents if water is used as the diluent. Suitable auxiliaries for this purpose are essentially: solvents such as aromatics (e. g. xylene), chlorinated aromatics (e. g. chlorobenzenes), paraffins (e. g. mineral oil fractions), alcohols (e. g. methanol, butanol), ketones (e. g. cyclohexanone), amines (e. g. ethanolamine, dimethylformamide) and water; carriers such as ground natural minerals (e. g. kaolins, clays, talc, chalk) and ground synthetic minerals (e. g. finely divided silica, silicates); emulsifiers such as nonionic and anionic emulsifiers (e. g. polyoxyethylene fatty alcohol ethers, alkylsulfonates and arylsulfonates) and dispersants such as lignosulfite waste liquors and methylcellulose.

Suitable surfactants are the alkali metal salts, alkaline earth metal salts and ammonium salts of aromatic sulfonic acids, e. g. ligno-, phenol-, naphthalene-and dibutyinaphthalenesulfonic acid, and of fatty acids, alkyl-and alkylarylsulfonates, alkyl, lauryl ether and fatty alcohol sulfates, and salts of sulfate hexa-, hepta-and octadecanols, or of fatty alcohol glycol ethers, condensates of sulfonate naphthalene and its derivatives with formaldehyde, condensates of naphthalene or of the naphthalenesulfonic acids with phenol and formaldehyde, polyoxyethylene octylphenol ether, ethoxylated isooctyl-, octyl-or nonylphenol, alkylphenol polyglycol ethers, tributylphenyl polyglycol ethers, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignosulfite waste liquors or methylcellulose.

Powders, materials for broadcasting and dusts can be prepared by mixing or jointly grinding the amide compounds I with a solid carrier.

Granules (e. g. coated granules, impregnated granules or homogeneous granules) are usually prepared by binding the active ingredient, or active ingredients, to a solid carrier.

Fillers or solid carriers are, for example, mineral earths, such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials and fertilizers, such as ammonium sulfate, ammonium phosphate, ammonium nitrate, ureas, and products of vegetable origin, such as cereal meal, tree bark meal, wood meal and nutshell meal, cellulose powders or other solid carriers.

The formulations generally comprise from 0.1 to 95% by weight, preferably 0.5 to 90% by weight, of the compound. The active ingredients are employed in a purity of from 90% to 100%, preferably 95% to 100% (according to NMR spectrum or HPLC).

Examples of such preparations comprising the active ingredients are: I. A solution of 90 parts by weight of the active ingredients and 10 parts by weight of N-methylpyrrolidone; this solution is suitable for use in the form of microdrops ; II. A mixture of 20 parts by weight of the active ingredients, 80 parts by weight of xylene, 10 parts by weight of the adduct of 8 to 10 mol of ethylene oxide and 1 mol of oleic acid N-monoethanolamide, 5 parts by weight of the calcium salt of dodecylbenzenesulfonic acid, 5 parts by weight of the adduct of 40 mol of ethylene oxide and 1 mol of castor oil; a dispersion is obtained by finely distributing the solution in water; III. An aqueous dispersion of 20 parts by weight of the active ingredients, 40 parts by weight of cyclohexanone, 30 parts by weight of isobutanol, 20 parts by weight of the adduct of 40 mol of ethylene oxide and 1 mol of castor oil ; IV. An aqueous dispersion of 20 parts by weight of the active ingredients, 25 parts by weight of cyclohexanol, 65 parts by weight of a mineral oil fraction of boiling point 210 to 280°C, and 10 parts by weight of the adduct of 40 mol of ethylene oxide and 1 mol of castor oil ; V. A mixture, ground in a hammer mill, of 80 parts by weight of the active ingredients, 3 parts by weight of the sodium salt of diisobutylnaphthalene-1-sulfonic acid, 10 parts by weight of the sodium salt of a lignosulfonic acid from a sulfite waste liquor and 7 parts by weight of pulverulent silica gel ; a spray mixture is obtained by finely distributing the mixture in water; VI. An intimate mixture of 3 parts by weight of the active ingredients and 97 parts by weight of finely divided kaolin ; this dust comprises 3% by weight of active ingredient; Vil. An intimate mixture of 30 parts by weight of the active ingredients, 92 parts by weight of pulverulent silica gel and 8 parts by weight of paraffin oil which had been sprayed onto the surface of this silica gel ; this formulation imparts good adhesion to the active ingredient ; VIII. A stable aqueous dispersion of 40 parts by weight of the active ingredients, 10 parts by weight of the sodium salt of a phenolsulfonic acid/urea/formaldehyde condensate, 2 parts by weight of silica gel and 48 parts by weight of water; this dispersion may be diluted further; IX. A stable oily dispersion of 20 parts by weight of the active ingredients, 2 parts by weight of the calcium salt of dodecylbenzenesulfonic acid, 8 parts by weight of fatty alcohol polyglycol ether, 20 parts by weight of the sodium salt of a phenolsulfonic acid/urea/formaldehyde condensate and 88 parts by weight of a paraffinic mineral oil.

The amide compounds according to the invention may also be present in combination with other active compounds, for example with herbicides, insecticides, growth regulators, fungicides or else with fertilizers. In many cases, a mixture of the amide compounds 1, or of the compositions comprising them, in the use form as growth promotors with other active compounds results in a broader spectrum of activity.

The following list of fungicides in combination with which the amide compounds according to the invention can be used is intended to illustrate the possible combinations, but not to impose any limitation: sulfur, dithiocarbamates and their derivatives, such as iron (III) dimethyldithiocarbamate, zinc dimethyidithiocarbamate, zinc ethylenebisdithiocarbamate, manganese ethylenebisdithiocarbamate, manganese zinc ethylenediaminebisdithiocarbamate, tetramethylthiuram disulfide, ammonia complex of zinc (N, Nethylenebisdithiocarbamate), ammonia complex of zinc (N, N'-propylenebisdithiocarbamate), zinc (N, N'-propylenebisdithiocarbamate), N, N'-polypropylenebis (thiocarbamoyl) disulfide ; nitro derivatives, such as dinitro(1-methylheptyl) phenyl crotonate, 2-sec-butyl4, 6-dinitrophenyl-3, 3-dimethyl acrylate, 2-sec-butyl-4, 6-dinitrophenylisopropyl carbonate, diisopropyl 5-nitroisophthalate ; heterocyclic substances, such as 2-heptadecyl-2-imidazoline acetate, 2,4-dichloro-6-(o-chloroanilino)-s-triazine, 0, 0-diethyl phthalimidophosphonothioate, 5-amino-1-[bis (dimethylamino) phosphinyl]-3-phenyl-1, 2, 4-triazole, 2,3-dicyano-1,4-dithioanthraquinone, 2-thio-1, 3-dithiolo [4,5-b] quinoxaline, methyl 1-(butyl-carbamoyl)-2-benzimidazolecarbamate, 2-methoxycarbonylaminobenzimidazole, 2-(furyl-(2)) benzimidazole, 2-(thiazolyl-(4)) benzimidazole, N-(1, 1,2, 2-tetrachloroethylthio) tetrahydrophthalimide, N-trichloromethylthiotetrahydro-phthalimide, N-trichloromethylthiophthalimide; N-dichlorofluoromethylthio-N', N'-dimethyl-N-phenylsulfuric diamide, 5-ethoxy-3-trichloromethyl-1, 2, 3-thiadiazole, 2-thiocyanatomethylthiobenzothiazole, 1,4-dichloro-2, 5-dimethoxybenzene, 4-(2-chlorophenylhydrazono)-3-methyl-5-isoxazolone, pyridine 2-thio-1-oxide, 8-hydroxyquinoline or its copper salt, 2,3-dihydro-5-carboxanilido-6-methyl-1, 4-oxathiine, 2, 3-dihydro-5-carboxanilido-6-methyl-1, 4-oxathiine 4,4-dioxide, 2-methyl-5, 6-dihydro-4H-pyran-3-carboxanilide, 2-methylfuran-3-carboxanilide, 2, 5-dimethylfuran-3-carboxanilide, 2,4, 5-trimethylfuran-3-carboxanilide, N-cyclohexyl-2, 5-dimethylfuran-3-carboxamide, N-cyclohexyl-N-methoxy-2, 5-dimethylfuran-3-carboxamide, 2-methylbenzanilide, 2-iodobenzanilide, N-formyl-N-morpholine 2,2, 2-trichloroethyl acetal, piperazine-1, 4-diyl-bis-1-(2, 2, 2-trichloroethyl) formamide, 1-(3,4-dichloroanilino)-1-formyl-amino-2, 2, 2-trichloroethane, 2, 6-dimethyl-N-tridecylmorpholine or its salts, 2,6-dimethyl-N-cyclododecylmorpholine or its salts,-N-[3-(p-tert-butylphenyl)-2-methylpropyl]-cis-2, 6-dimethylmorpholine, N-[3-(p-tert-butylphenyl)-2-methyl-propyl] piperidine, 1-[2-(2,4-dichlorophenyl)-4-ethyl-1,3-di-oxolan-2-yl-ethyl]-1H-1,2, 4-triazole, 1-[2-(2, 4-dichlorophenyl)-4-n-propyl-1, 3-dioxolan-2-ylethyl]-1H-1,2, 4-triazole, N-(n-propyl)-N-(2, 4, 6-trichlorophenoxyethyl)-N'-imidazolylurea, 1-(4-chlorophenoxy)-3, 3-dimethyl-1-(1H-1, 2, 4-triazol-1-yl)-2-butanone, 1-(4-chlorophenoxy)-3,3-dimethyl-1-(1H-1, 2, 4-triazol-1-yl)-2-butanol, (2RS, 3RS)-1-[3-(2-chloro-phenyl)-2-(4-fluorophenyl) oxiran-2-ylmethyl]-1 H-1, 2, 4-triazole, α-(2-chlorophenyl)-α-(4-chlorophenyl)-5-pyrimidine-methanol, 5-butyl-2-dimethylamino-4-hydroxy-6-methylpyrimidine, bis (p-chlorophenyl)-3-pyridinemethanol, 1,2-bis (3-ethoxycarbonyl-2-thioureido) benzene, 1, 2-bis-(3-methoxycarbonyl-2-thioureido) benzene; strobilurins, such as methyl E-methoximino-[a-(o-tolyloxy)-o-tolyl] acetate, methyl E-2-{2-[6-(2-cyanophenoxy)-pyridimin-4-yloxy]-phenyl} 3-methoxyacrylate, methyl E-methoximino-[α-(2-phenoxyphenyl)] acetamide, methyl E-methoximino-[α-(2, 5-dimethylphenoxy)-o-tolyl] acetamide ; 'ans) anilinopyrimidines, such as N-(4, 6-dimethylpyrimidin-2-yl) aniline, N-[4-methyl-6-(1-propynyl) pyrimidin-2-yl] aniline, N-(4-methyl-6-cyclopropylpyrimidin-2-yl) aniline ; 'they phenylpyrroles, such as 4-(2, 2-difluoro-1, 3-benzodioxol-4-yl) pyrrole-3-carbonitrile ; cinnamamides, such as 3-(4-chlorophenyl)-3-(3, 4-dimethoxy-phenyl) acryloylmorpholide ; and a variety of fungicides, such as dodecylguanidine acetate, 3-[3-(3, 5-dimethyl-2-oxycyclohexyl)-2-hydroxyethyl] glutarimide, hexachlorobenzene, methyl N-(2, 6-dimethylphenyl)-N-(2-furoyl)-DL-alaninate, DL-N-(2,6-dimethylphenyl)-N-(2'-methoxyacetyl) alanine methyl ester, N-(2,6-dimethylphenyl)-N-chloroacetyl-D, L-2-aminobutyrolactone, DL-N-(2, 6-dimethylphenyl)-N-(phenylacetyl) alanine methyl ester, 5-methyl-5-vinyl-3-(3, 5-dichlorophenyl)-2, 4-dioxo-1, 3-oxazolidine, 3-(3, 5-dichlorophenyl)-5-methyl-5-methoxy-methyl-1, 3-oxazolidine-2, 4-dione, 3-(3, 5-dichloro-phenyl)-I-isopropylcarbamoylhydantoin, N-(3, 5-dichlorophenyl)-1, 2-dimethylcyclopropane-1, 2-dicarboximide, 2-cyano-[N-(ethylaminocarbonyl)-2-methoximino] acetamide, 1-[2-(2, 4-dichlorophenyl) pentyl]-1 H-1, 2, 4-triazole, 2,4-difluoro-α-(1 H-1,2, 4-triazolyl-1-methyl) benzohydryl alcohol, N-(3-chloro-2, 6-dinitro-4-trifluoromethylphenyl)-5-trifluoromethyl-3-chloro-2-aminopyridine, 1-((bis-(4-fluorophenyl) methylsilyl) methyl)-1 H-1,2, 4-triazole.

As examples of crops that might be modified by plant growth promotion action, there are vegetables, nuts or fruits.

A further aspect of the present invention is, that mixtures of the amide compounds of the formula I with strobilurins are suitable in the method of plant growth promotion.

Suitable Strobilurins for these mixtures are for example azoxystrobin, dimoxystrobin, fluoxastrobin, kresoxim-methyl, metominostrobin, orysastrobin, picoxystrobin, pyraclos-trobin or trifloxystrobin.

Amide compound I and strobilurin are preferably employed in a weight ratio in the range of from 20: 1 to 1: 20, in particular from 10: 1 to 1: 10.

The amide compounds of the formular I and the strobilurin may be applied simultane-ously, that is either together or separately, or in succession.

As examples of crops that might be modified by plant growth regulating action ; there are vegetables, nuts or fruits.

The precise amount of amide compound will depend upon the particular plant species being treated. This may be determined by the man skilled in the art with a few experi-ments and may vary in plant responses depending upon the total amount of compound used, as well as the particular plant species, which is being treated. Of course, the amount of amide compound should be non-phytotoxic with respect of the plant being treated.

Although the preferred method of application of the amide compounds used in the process of this invention is directly to the foliage and stems of plants, it as been deemed that such compounds may be applied to the soil in which the plants are grow-ing, and that such compounds will be root-absorbed to a sufficient extent so as to result in plant responses in accordance with the teachings of this invention.

The following examples are illustrative of methods of plant growth regulation according to the invention, but should not be understood as limiting the said instant invention.

## Claims

1. A method for treating plants in need of growth promotion, comprising applying to said plants, to the seeds from which they grow or to the locus in which they grow, a non-phytotoxic, effective plant growth promoting amount of an amide compound according to formula I 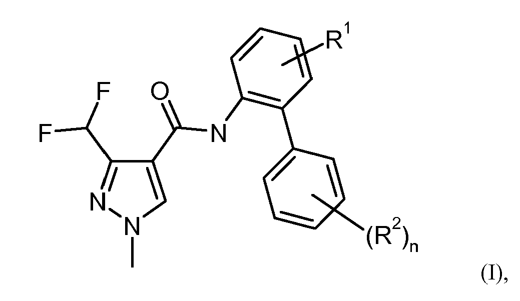 wherein
R¹ is hydrogen or halogen;
R² is halogen;
n is an integer selected from 1 or 2.

2. A method according to claim 1, which comprises an amide compound of the formula I in which
R¹ is fluorine;
R² is chlorine;
n is 2.

3. A method according to claim 1, which comprises as amide compound a compound of the formula I in which
R¹ is 5-fluorine;
R² is 3,4-dichloro.

4. A method according to claim 1, which comprises as amide compound selected from the group consisting of N-(3',4'-dichloro-5-fluorobiphenyl-2-yl)-3-(difluoromethyl)-1-methyl-1H-pyrazole-4-carboxamide (Bixafen) and N-(3',4'-dichlorobiphenyl-2-yl)-3-(difluoromethyl)-1-methyl-1 H-pyrazole-4-carboxamide.

5. A method according to claim 1, wherein the plant growth promoting amount of the amide compound of formula (I) applied is sufficient to provide at least one plant growth promoting effect selected from the group consisting of: a) bigger fruit size b) bigger vegetable size c) higher sugar concentration of fruits d) more developed root system e) higher crop firmness longer storability g) improved appearance h) better fruit finish i) earlier fruit maturation j) increase in plant height k) bigger leaf blade I) less dead basal leaves m) greener leaf color n) earlier flowering o) increased shoot growth p) improved plant vigour q) early germination.

6. A method according to claim 1, wherein the amide compound of formula (I) is applied to said plants or the locus in which they grow in the form of granules at an application rate of from about 0.005 kg/ha to about 0.5 kg/ha of compound of formula (I).

7. A method according to claim 6, wherein the application rate is from about 0. 01kg/ha to about 0.2 kg/ha of compound of formula (I).

8. A method according to claim 1, wherein the plants being selected from the group consisting of rice, corn, cereal and vegetable plants and turf.

9. A method according to claim 1, wherein a mixture of the amide compound of for-mula I with a strobilurin is used.

10. A method according to claim 9, wherein the strobilurin is selected from the group consisting of azoxystrobin, dimoxystrobin, fluoxastrobin, kresoxim-methyl, metominostrobin, orysastrobin, picoxystrobin, pyraclostrobin or trifloxystrobin.

11. A method according to claim 9, wherein a mixture bixafen with pyraclostrobin is used.

12. A method according to claim 9, wherein the ratio between the amide compound I and the strobilurin is from 20: 1 to 1: 20.

13. A method according to claim 9, wherein the amide compound and the strobilurin are applied simultaneously, that is either together or separately, or in succession.
